Europäisches Patentamt

(19) European Patent Office

Office européen des brevets

(11) Publication number: **0 092 311**
**B1**

(12) **EUROPEAN PATENT SPECIFICATION**

(45) Date of publication of patent specification: **28.05.86**

(21) Application number: **83301287.5**

(22) Date of filing: **09.03.83**

(51) Int. Cl.⁴: **F 16 D 55/32**

(54) **A disc brake.**

(30) Priority: **17.04.82 GB 8211196**

(43) Date of publication of application:
**26.10.83 Bulletin 83/43**

(45) Publication of the grant of the patent:
**28.05.86 Bulletin 86/22**

(84) Designated Contracting States:
**BE DE FR GB IT SE**

(56) References cited:
**FR-A-2 040 586**
**FR-A-2 418 385**
**FR-E- 68 015**
**GB-A- 837 698**
**US-A-2 756 844**
**US-A-2 973 836**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Bass, Richard Arnold**
**12 Normandy Close**
**Hampton Magna Warwick Warwicks (GB)**

(74) Representative: **Cundy, Anthony Brian**
**Anthony Cundy & Company 384 Station Road**
**Dorridge**
**Solihull West Midlands B93 8ES (GB)**

Courier Press, Leamington Spa, England.

## Description

This invention relates to disc brakes and particularly but not exclusively to disc brakes suitable for use on two wheeled vehicles such as motor scooters.

It is already known from French patent publication 2040586 (and its equivalent British patent specification 1238630) to provide a disc brake comprising an annular disc which is slidable on but constrained to rotate with a rotary member to be braked, two opposed friction pads one on each side of the disc, a caliper which straddles a periphery of the disc and has an actuator to directly thrust one pad against the disc such that the disc is moved into engagement with the other pad as well as said one pad when the actuator thrusts said one pad against the disc. This known disc brake also incorporates springs acting between the rotary member and the disc to centralise the disc with respect to the rotary member.

An object of the present invention is to provide a disc brake in which an annular disc is axially slidable on a rotary member but is located with respect to the rotatable member in an improved manner.

Accordingly there is provided a disc brake comprising an annular disc which is axially slidable on but constrained to rotate with a rotary member to be braked, two opposed friction pads one on each side of the disc, a caliper which straddles a periphery of the disc and has an actuator to directly thrust one pad against the disc such that the disc is moved into engagement with the other pad as well as said one pad when the actuator thrusts said one pad against the disc and spring means acting between the disc and the rotary member to bias guide surfaces on the disc and rotary member into mutual contact. Biasing of guide surfaces on the disc and rotary member into mutual contact provides effective location of the disc.

It is also known from US Patent 2756844 to provide a disc brake in which the disc is axially slidable on but constrained to rotate with a rotary member to be braked in which the rotary member incorporates an array of pins and the disc is slidably on the pins. Preferably a disc brake in accordance with the present invention is of the kind in which the rotary member incorporates a circular array of pins and the disc is slidable on the pins and is characterised in that the spring means reacts between the pins and the disc to bias the pins against the sides of the bores in the disc in which the pins slide. The spring means acting between the rotary member and the disc may be a single annular plate having holes through which the pins pass and spring projections that react against the disc to bias the disc against the pins.

The projections may each have a spring tag that reacts against a portion of the disc to bias the disc against the pins. The annular portion of the plate spring may be located on one side of the disc and each projection may pass axially across the disc and have a location tag to hold the disc and plate spring axially together.

The invention will be described by way of example and with reference to the accompanying drawings in which:—

Figure 1 is an elevation of a disc brake according to this invention as fitted to a motor scooter;

Figure 2 is a section on the line II—II of Figure 1;

Figure 3 is an elevation of an anti-rattle spring as is utilised in the disc brake showing one of the radial projections as a development of the projection and tags prior to bending; and

Figure 4 is a section on the line IV—IV of Figure 3.

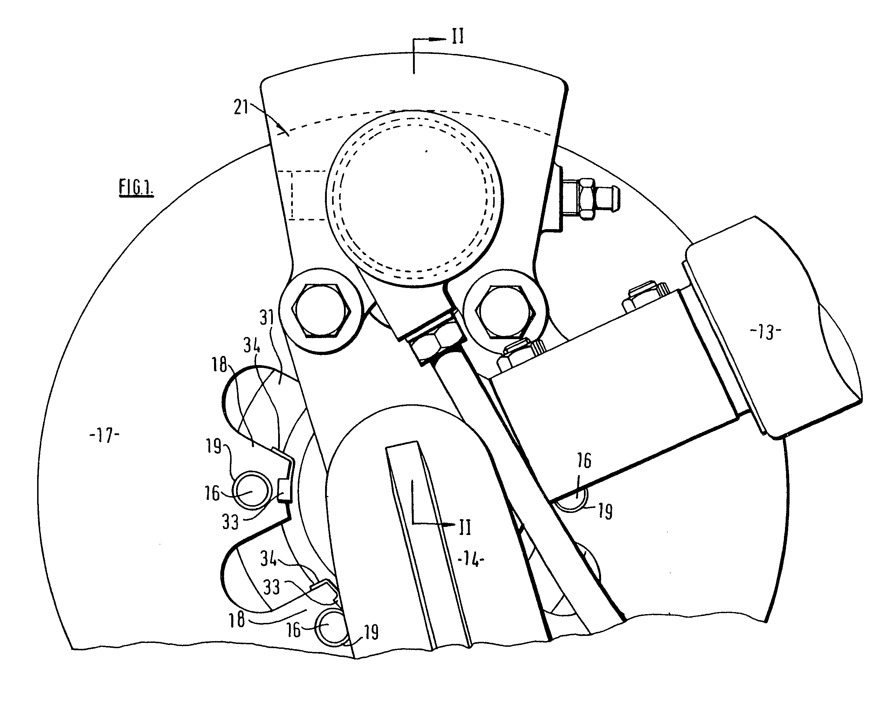

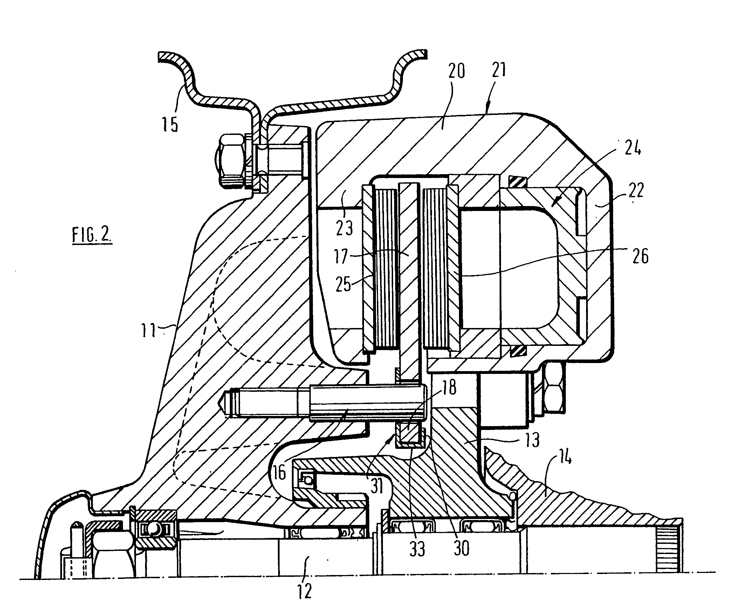

With reference to figures 1 to 3 of the drawings a wheel hub 11 rotates on an axle 12 carried in a front fork shock absorber stanchion 13 and a swinging arm 14 also carried by the front fork. The wheel hub 11 carries a wheel rim 15 at its outer periphery, and has a circular array of six axially extending pins 16 around its inner margin adjacent the axle.

An annular brake disc 17 has six radially inwardly projecting lugs 18 on its inner periphery. Each lug 18 has a circular hole 19 through which the pin 16 slides so that the disc 17 is axially slidable but is rotationally fast relative to the wheel hub.

A caliper 21 comprises two arms 22 and 23 located on opposite sides of the disc interconnected by a bridge portion 20 which passes over the outer periphery of the disc. The arm 22, located on the side of the disc away from the hub 11, carries a hydraulic actuator 24 and is also utilised for the attachment by bolts of the caliper 21 to the fork stanchion 13. Two opposed friction pads 25 and 26 are located one on each side of the disc, one of the pads 26 being carried by the arm 22 and the other 25 by the arm 23. To apply the brake the hydraulic actuator 24 thrusts the pad 26 directly against the disc 17, which then slides axially on the pins 16 to engage the opposed pad 25. A braking force is thus generated between each pad and the disc.

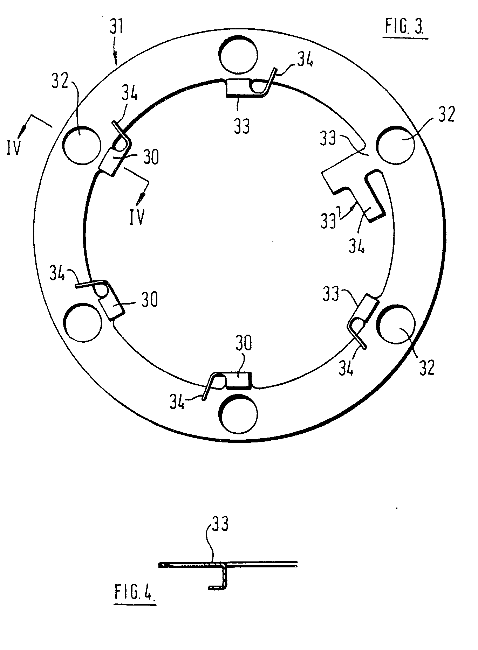

An annular anti-rattle spring 31 (see figure 3) has six equi-angularly spaced holes 32 therein through which the pins 16 pass. On the inner periphery of the spring adjacent each hole 32 are located six radially inward projections 33. One of the projections 331 is shown as a development prior to bending into its finished shape. All the projections are bent to the said side of the spring to form a 'U' section, as shown in Figure 4, with an outwardly directed location tag 30. The base of each 'U' shaped projection 33 has a spring tag 34 that projects substantially radially outward and parallel to the annular part of the anti-rattle spring.

The anti-rattle spring 31 is located on the side of the disc 17 adjacent the hub 11, as can best be seen in figure 1. The 'U' shaped radial projections 33 on the spring each pass around the radially inner edge of a respective lug 18 on the disc with a clearance so that the spring is positioned axially with respect to the disc. The tags 34 each react against the radial side of a respective lug to bias the disc against the pins 16 causing a frictional engagement between the guide surfaces of the disc and the hub, namely the pins and the walls of the bores in the disc in which the pins slide.

This has two advantages:—

(a) it prevents the disc from chattering during brake applications and while the wheel is running free.

(b) it helps to prevent the disc from moving axially during rotation of the wheel and thereby causing "knock-back" of the actuator piston to an undesired extent.

## Claims

1. A disc brake comprising an annular disc (17) which is axially slidable on but constrained to rotate with a rotary member (11) to be braked, two opposed friction pads (25 and 26) one on each side of the disc, a caliper (21) which straddles a periphery of the disc and has an actuator (24) to directly thrust one pad (26) against the disc, such that the disc is moved into engagement with the other pad (25) as well as said one pad when the actuator thrusts said one pad against the disc characterised by the provision of spring means (31) acting between the disc and the rotary member to bias guide surfaces on the disc and rotary member into mutual contact.

2. A disc brake according to claim 1 wherein the rotary member (11) incorporates a circular array of pins (16) and the disc is slidable on the pins, characterised in that the spring means (31) reacts between the pins (16) and the disc (17) to bias the pins against the sides of bores in the disc in which the pins slide.

3. A disc brake according to claim 2, characterised in that the spring means comprises a single annular plate having circumferentially spaced holes (32) therein through each of which one of the pins (16) passes and radial projections (33) that react against the disc to bias the disc against the pins.

4. A disc brake according to claim 3, characterised in that the projections each have a spring tag (34) that reacts against a portion of the disc, to bias the disc against the pins.

5. A disc brake according to claim 4, characterised in that the annular portion of the plate spring is located on one side of the disc and each projection passes axially across the disc and has a location tag (30) to hold the disc and plate spring axially together.

## Patentansprüche

1. Scheibenbremse mit einer ringförmigen Scheibe (17), die auf einem zu bremsenden Drehteil (11) axial gleiten kann, aber gezwungen ist, sich mit diesem zu drehen, zwei entgegengesetzten Reibklötzen (25 und 26), je einer auf jeder Seite der Scheibe, einem Sattel (21), der einen Rand der Scheibe überbrückt und eine Betätigungseinrichtung (24) hat, um einen Klotz (26) direkt gegen die Scheibe zu drücken, derart, daß die Scheibe in Eingriff mit dem anderen Klotz (25) sowie mit dem einen Klotz bewegt wird, wenn die Betätigungseinrichtung den einen Klotz gegen die Scheibe drückt, gekennzeichnet durch die Bereitstellung eines Federmittels (31), das zwischen der Scheibe und dem Drehteil wirkt, um Führungsflächen an der Scheibe und dem Drehteil in gegenseitigen Kontakt vorzuspannen.

2. Scheibenbremse nach Anspruch 1, wobei das Drehteil (11) eine kreisförmige regelmäßige Anordnung von Zapfen (16) beinhaltet und die Scheibe auf den Zapfen gleiten kann, dadurch gekennzeichnet, daß das Federmittel (31) eine Reaktionskraft zwischen den Zapfen (16) und der Scheibe (17) ausübt, um die Zapfen gegen die Seiten von Bohrungen in der Scheibe vorzugspannen, in denen die Zapfen gleiten.

3. Scheibenbremse nach Anspruch 2, dadurch gekennzeichnet, daß das Federmittel eine einzelne ringfömige Platte aufweist, die am Umfang beabstandete Löcher (32) darin hat, durch die jeweils einer der Zapfen (16) geht, und radiale Vorsprünge (33) hat, die eine Reaktionskraft auf die Scheibe ausüben, um die Scheibe gegen die Zapfen vorzuspannen.

4. Scheibenbremse nach Anspruch 3, dadurch gekennzeichnet, daß jeder der Vorsprünge ein Federende (34) hat, das auf einen Teil der Scheibe eine Reaktionskraft ausübt, um die Scheibe gegen die Zapfen vorzuspannen.

5. Scheibenbremse nach Anspruch 4, dadurch gekennzeichnet, daß der ringförmige Teil der Plattenfeder auf einer Seite der Scheibe angeordnet ist und jeder Vorsprung axial über die Scheibe geht und ein Halteende (30) hat, um die Scheibe und die Plattenfeder axial zusammenzuhalten.

## Revendications

1. Frein à disque comprenant un disque annulaire (17) qui est monté déplaçable à coulissement axialement sur, mais contraint à tourner avec un élément rotatif (11) devant être freiné, deux patins de friction opposés (25 et 26) disposés de chaque côté du disque, un étrier (21) qui emjambe une périphérie du disque et comporte un dispositif d'actionnement (24) pour pousser directement un premier patin (26) contre le disque, de sorte que le disque est déplacé pour venir en contact avec le second patin (25), de même que ledit premier patin, lorsque le dispositif d'actionnement pousse ledit premier patin contre le disque, caractérisé en ce qu'il est prévu des moyens élastiques (31) agissant entre le disque et l'élément rotatif, pour solliciter des surfaces de guidage sur le disque et l'élément rotatif en contact les unes avec les autres.

2. Frein à disque selon la revendication 1, dans lequel l'élément rotatif (11) comprend un agencement circulaire de broches (16) et le disque est monté déplaçable à coulissement sur les broches, caractérisé en ce que les moyens élastiques (31) réagissent entre les broches (16) et le disque (17) pour solliciter les broches contre les rebords d'évidements dans le disque, dans lesquels les broches coulissent.

3. Frein à disque selon la revendication 2, caractérisé en ce que les moyens élastiques comportent une plaque annulaire unique présentant des trous (32) espacés sur une circonférence, à travers chacun desquels passe une desdites broches (16), et des parties en saillie radiales (33) qui réagissent contre le disque pour solliciter le disque contre les broches.

4. Frein à disque selon la revendication 3, caractérisé en ce que les parties en saillie comportent chacune une languette élastique (34) qui réagit contre une partie du disque, pour solliciter le disque contre les broches.

5. Frein à disque selon la revendication 4, caractérisé en ce que la partie annulaire du ressort en plaque, est disposée sur un côté du disque, et chaque partie en saillie traverse axialement le disque et possède une languette de positionnement (30) pour maintenir ensemble le disque et le ressort en plaque axialement.

FIG.1.

0 092 311

FIG. 2.

FIG. 3.

31

32

34

IV

34

30

IV

32

34

30

33

33

33

33²

34

32

34

33

34

30

34

33

FIG. 4.